# EUROPEAN PATENT APPLICATION

(11) **EP 4 741 463 A1**
(43) Date of publication of application: **13.05.2026**
(21) Application number: 24211030.2
(22) Date of filing: 06.11.2024
(51) Int. Cl.: C09D 11/101, C09D 11/322, C09D 11/40

(54) **UV CURABLE COMPOSITIONS AND INKS**

(71) Applicant: AGFA NV, 2640 Mortsel (BE)
(72) Inventor: LOCCUFIER, Johan, 2640 Mortsel (BE); ADRIAENSSENS, Yves, 2640 Mortsel (BE)
(74) Representative: Strijckers, Hans Louis P.

(57) **Abstract**

A UV curable composition containing a mixture of free radical polymerizable monomers and a APO photoinitiator according to formula (I): 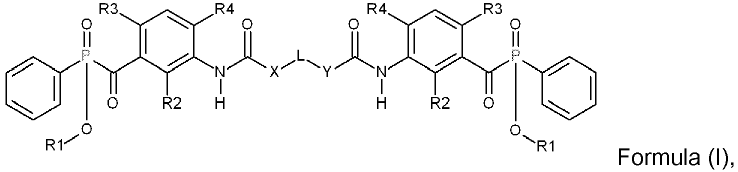 wherein
R1 is selected from the group consisting of an alkyl group, an alkenyl group, an alkynyl group, an aralkyl group, an alkaryl group and an aryl group or a heteroaryl group; R2 and R3 are independently selected from an alkyl group and an alkoxy group; R4 is selected from a hydrogen, an alkyl group and an alkoxy group;
X and Y are independently selected from an oxygen atom, a methylene group, a - C(=CH2)- group, and a carbon atom present in a group selected from a straight chain alkylene group, an alkenylene group, an arylene group, a heteroarylene group and a cycloalkylene group; L represents a divalent linking group selected from the group consisting of an unsubstituted alkylene group, an arylene group, a heteroarylene group, a cycloalkylene group, a substituted alkylene group substituted by one or more ether groups, a substituted alkylene group substituted by one or more substituents selected from the group consisting of an aryl group, a heteroaryl group, an arylene group, a heteroarylene group, a cycloalkylene group, an ester group, an amide group, an amine group, an ether group, a thioether group, a ketone group, an aldehyde group, a sulfoxide group, a sulfone group, a sulfonate ester group, a sulphonamide group, -Cl, -Br, -I, -OH, - SH, -CN and -NO₂; and
wherein the UV curable composition is free of a photoinitiator including 2 monoacyl phosphine oxide moieties linked to each other via their acyl group and wherein the 2 monoacyl phosphine oxide moieties have a chemical structure differing in the phosphine oxide part. Cured products and inkjet printing methods with the radiation curable compositions are also disclosed.

## Description

### Technical Field

The present invention relates to UV curable compositions, especially to UV curable (inkjet) inks.

### Background Art

State of the art UV curing technology is based on LED curing, operating for the majority of the systems at 395 nm. The number of industrially available photoinitiators suitable for curing at such wavelength is rather limited.

A combination of thioxanthones and amine-based co-initiators gives high curing speed at 395 nm, but results in considerable yellowing of the cured layers, making it unsuitable for UV curable compositions such as varnishes and white inks.

Acyl phosphine oxides have found to be very suitable for 395 nm LED curing without these photo-yellowing problems. However, the number of industrially available acyl phosphine oxides is limited and there are increasing concerns on their toxicology. The applicability of bis-acyl phosphine oxides is often limited by their solubility in UV curable compositions, leading to mono-acyl phosphine oxides as particularly preferred photoinitiators for 395 nm radiation curable inkjet inks, further narrowing the options.

On top of the toxicological concerns and limitations in formulation latitude, as good as all available acyl phosphine oxide initiators are prone to migration and generate volatile degradation products, leading to a smell. Especially smell is the limiting factor for a lot of large volume applications such as indoor decoration. The application scope would further widen if on top the migration problem can be solved. Over the last decade, there has been a considerable research activity in search of alternatives for the industrially available acyl phosphine oxides, targeting at solving the above-mentioned problems.

Functionalization on the mesityl fragment of acyl phosphine oxide photoinitiators as disclosed in WO 2014/051026 (FUJIFILM) , WO 2014/129213 (FUJIFILM) , WO 2019/243039 (AGFA) and WO 2022/106099 (AGFA) is a potential solution to solve the problem of volatile degradation products.

WO 2019/243039 (AGFA) discloses urea and oxalyl amide functionalized acyl phosphine oxides, where additional supramolecular interactions are used to further control volatility of the degradation products.

In WO 2022/106099 (AGFA) , additional tertiary amines are incorporated into the structure to further optimize the surface cure of printed images, thereby preventing the migration of skin-irritating acrylates. However, the use of supramolecular interactions often limits the formulation latitude which had to be controlled by additional structural elements leading to an increase in molecular weight per photoinitiating moiety, impacting both the viscosity of the formulation and the curing speed for a same weight ratio in the formulation. For maintaining the curing speed on an acceptable level, higher amounts of the photoinitiator have to be added further impacting the viscosity. The impact on viscosity limits the applicability of the disclosed photoinitiators in inkjet applications, where viscosity of the formulation is particularly critical.

Several inkjet applications require a high chroma in the colored prints. Gloss is a particularly important aspect of colored images. Improvements in gloss lead to higher chroma in colored prints and a broader dynamic range in tonality (darker blacks and richer shadows), which in its turn brings a larger color gamut. An ink set with a larger color gamut generally has a lower ink consumption, because less ink needs to be laid down to match the same color effects.

Enhancing gloss is frequently achieved by altering the monomer composition, as demonstrated in US 2020254755 A (SEIKO EPSON). However, choosing specific monomers often leads to trade-offs in other properties.

There is still a need for UV curable compositions exhibiting high curability at 395 nm, no photoyellowing and less toxicological concerns or photoinitiator solubility issues, while delivering cured products with improved gloss, minimal smell and minimal migration problems.

### Summary of invention

It has surprisingly been found that the above-mentioned problems for UV curable compositions can be largely solved by using a mixture of free radical curable monomers and a specific photoinitiator.

An object of the present invention is to provide a UV curable composition, such as an ink jet ink, optimized for gloss.

Another object of the present invention is to provide a cured product with improved gloss and minimal smell or migration problems.

These and other objects and advantages of the present invention will become apparent from the detailed description given below.

### Description

### Definitions

The term "APO photoinitiator" is herein used as an abbreviation for an acyl phosphine oxide photoinitiator.

The term "alkyl group" means a functional group with all variants possible for each number of carbon atoms in the alkyl group, i.e. for one carbon atom: methyl, for two carbon atoms: ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified, a substituted or unsubstituted alkyl group is preferably a C₁ to C₆-alkyl group, more preferably a C₁ to C₄-alkyl group and most preferably a methyl group or ethyl group.

The term "alkoxy group" means a functional group with all variants possible for each number of carbon atoms in the alkoxy group, i.e. for one carbon atom: methoxy, for two carbon atoms: ethoxy, for three carbon atoms: n-propoxy and isopropoxy; for four carbon atoms: n-butoxyl, isobutoxy and tertiary-butoxy; etc.

Unless otherwise specified, an alkoxy-group is preferably a C₁ to C₆-alkoxy group, wherein a methoxy group and an ethoxy group are particularly preferred.

Unless otherwise specified, an alkenyl group is preferably a C₂ to C₆-alkenyl group.

Unless otherwise specified, an alkynyl group is preferably a C₂ to C₆-alkynyl group.

The term "aryl group" means a monocyclic or polycyclic aromatic ring structure comprising only carbon atoms in the aromatic ring structure. Unless otherwise specified, an aryl group is preferably a phenylgroup (C₆H₅-), or a naphthyl group.

The term "aralkyl group" means an aryl group attached to an alkyl chain. Unless otherwise specified, an aralkyl group is preferably an aryl group attached to a C₁ to C₆-alkyl chain, more preferably a benzyl group (C₆H₅CH₂-), where a phenyl group (C₆H₅-) is attached to a methylene group (-CH₂-).

The term "alkaryl group" means a functional group having one or more alkyl groups attached to an aryl group. Essentially, it's the opposite of an aralkyl group.

Unless otherwise specified, an alkaryl group is preferably a group having one, two, three or more alkyl groups attached to a phenyl group or a naphthyl group, more preferably a tolyl group (CH₃C₆H₄-), where a methyl group (CH₃-) is attached to a phenyl group.

The term "heteroaryl group" means a monocyclic or polycyclic aromatic ring comprising carbon atoms and one or more heteroatoms in the ring structure, preferably 1 to 4 heteroatoms independently selected from nitrogen, oxygen, selenium and sulphur.

Preferably, a heteroaryl group is a monocyclic ring, and more preferably a heteroaryl group is a five- or six-membered ring substituted by one, two or three oxygen atoms, nitrogen atoms, sulphur atoms, selenium atoms or combinations thereof.

Preferred examples of heteroaryl groups include, but are not limited to, pyridinyl, pyridazinyl, pyrimidyl, pyrazyl, quinolyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl, and oxazolyl.

The term "alkylene group" means a bivalent functional group derived from an alkane by removing two hydrogen atoms from different carbon atoms, thereby creating two points of attachment.

Unless otherwise specified, an alkylene group is preferably a C₁ to C₂₀-alkylene group, more preferably a C₁ to C₁₀-alkylene group and most preferably a C₁ to C₆-alkylene group.

The term "arylene group" means a bivalent functional group derived from an aromatic hydrocarbon (arene) by removing a hydrogen atom from two ring carbon atoms.

Unless otherwise specified, an arylene group is preferably a phenylene group.

The term "heteroarylene group" means a bivalent functional group derived from a heteroarene by removing a hydrogen atom from two ring atoms. Heteroarenes are aromatic compounds where one or more carbon atoms in the benzene ring are replaced by heteroatoms such as nitrogen, oxygen, or sulfur.

The term "cycloalkylene group" means a bivalent group derived from a cycloalkane by removing two hydrogen atoms from different carbon atoms in the ring.

Unless otherwise specified, a cycloalkylene group is preferably a cyclohexylene group

The term "substituted", in e.g. a substituted alkyl group, means that the group may be substituted by other atoms than the atoms normally present in such a group, for an alkyl group: carbon and hydrogen. For example, a substituted alkyl group may thus include a halogen atom or a thiol group, while an unsubstituted alkyl group contains only carbon and hydrogen atoms.

Unless otherwise specified, a substituted functional group of the functional groups listed above is preferably substituted by one or more constituents selected from the group consisting of an ester group, an amide group, an ether group, a thioether group, a ketone group, an aldehyde group, a sulfoxide group, a sulfone group, a sulfonate ester group, a sulphonamide group, -Cl, -Br, -I, -OH, -SH, -CN and -NO₂. UV Curable Compositions

A preferred aspect of the invention is a UV curable composition containing a mixture of free radical polymerizable monomers and a APO photoinitiator according to formula (I): 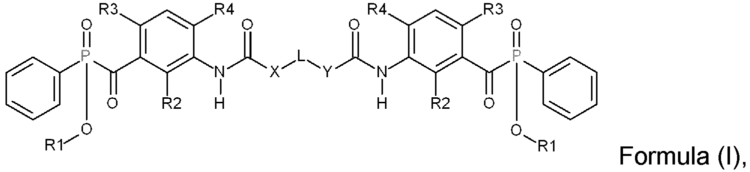 wherein
R1 is selected from the group consisting of an alkyl group, an alkenyl group, an alkynyl group, an aralkyl group, an alkaryl group and an aryl group or a heteroaryl group; R2 and R3 are independently selected from an alkyl group and an alkoxy group; R4 is selected from a hydrogen, an alkyl group and an alkoxy group; X and Y are independently selected from an oxygen atom, a methylene group, a -C(=CH2)- group, and a carbon atom present in a group selected from a straight chain alkylene group, an alkenylene group, an arylene group, a heteroarylene group and a cycloalkylene group; L represents a divalent linking group selected from the group consisting of an unsubstituted alkylene group, an arylene group, a heteroarylene group, a cycloalkylene group, a substituted alkylene group substituted by one or more ether groups, a substituted alkylene group substituted by one or more substituents selected from the group consisting of an aryl group, a heteroaryl group, an arylene group, a heteroarylene group, a cycloalkylene group, an ester group, an amide group, an amine group, an ether group, a thioether group, a ketone group, an aldehyde group, a sulfoxide group, a sulfone group, a sulfonate ester group, a sulphonamide group, -Cl, -Br, -I, -OH, -SH, -CN and -NO₂; and wherein the UV curable composition is free of a photoinitiator including 2 monoacyl phosphine oxide moieties linked to each other via their acyl group and wherein the 2 monoacyl phosphine oxide moieties have a chemical structure differing in the phosphine oxide part.

In a preferred embodiment, R1 is an alkyl group, more preferably a methyl group or an ethyl group, and most preferably an ethyl group.

In a preferred embodiment, R2 to R4 all represent an alkyl group, more preferably a methyl group or an ethyl group, and most preferably a methyl group.

In a preferred embodiment, one or more of the alkyl groups, alkoxy groups, alkenyl groups, alkynyl group, aralkyl groups, alkaryl groups, aryl groups, heteroaryl groups mentioned for R1 to R4 are substituted by a substituent selected from the group consisting of an ester group, an amide group, an amine group, an ether group, a thioether group, a ketone group, an aldehyde group, a sulfoxide group, a sulfone group, a sulfonate ester group, a sulphonamide group, -Cl, -Br, -I, -OH, -SH, -CN and -NO2.

In a preferred embodiment, the divalent linking group L is an unsubstituted alkylene group or a substituted alkylene group substituted by one or more ether groups. More preferably the divalent linking group L is selected from the group consisting of -(CH₂)ₙ- and -CH₂-O-CH₂-, where n represents an integer from 1 to 5.

Some or all of the above preferred embodiments may be combined with each other, because this results in high curability at 395 nm and no or minimal photoinitiator solubility problems.

In a particularly preferred embodiment of the UV curable composition, the APO photoinitiator is a APO photoinitiator according to formula (II):

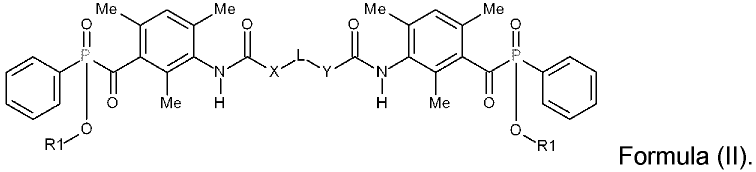

In a preferred embodiment of the APO photoinitiator according to formula (II), R1 is an alkyl group, more preferably a methyl group or an ethyl group, and most preferably an ethyl group.

In a preferred embodiment of the APO photoinitiator according to formula (II), the divalent linking group L is an unsubstituted alkylene group or a substituted alkylene group substituted by one or more ether groups. More preferably the divalent linking group L is selected from the group consisting of -(CH₂)ₙ- and -CH₂-O-CH₂-, where n represents an integer from 1 to 5.

Preferred examples of the APO photoinitiator according to formula (I) are given in Table 1 without being limited thereto.

**Table 1**

| | |
|---|---|
| 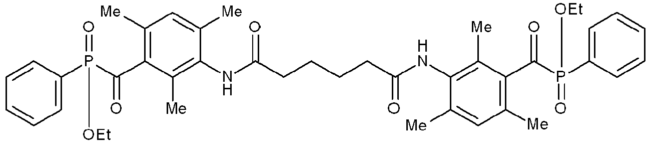 | DIPOL-1 |
| 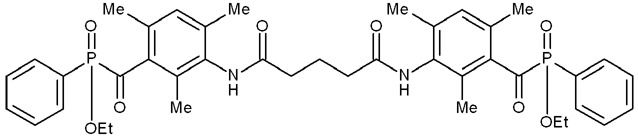 | DIPOL-2 |
| 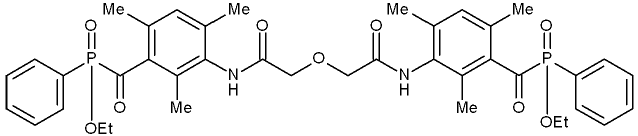 | DIPOL-3 |
| 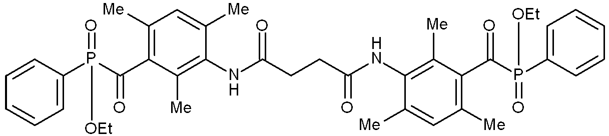 | DIPOL-4 |
| | DIPOL-5 |
| 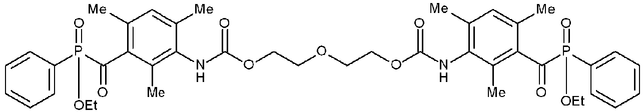 | |
| 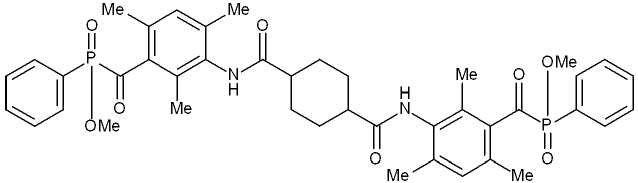 | DIPOL-6 |
| 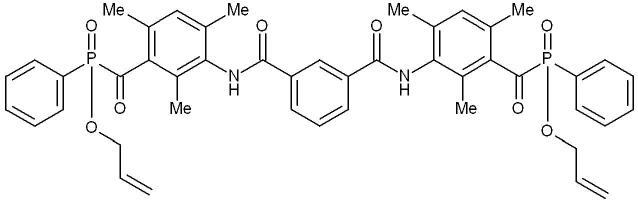 | DIPOL-7 |
| 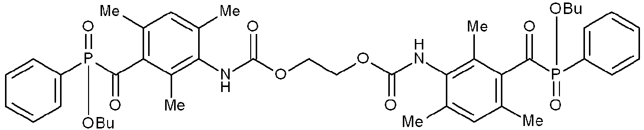 | DIPOL-8 |
| 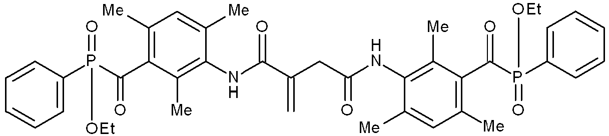 | DIPOL-9 |
| | DIPOL-10 |
| 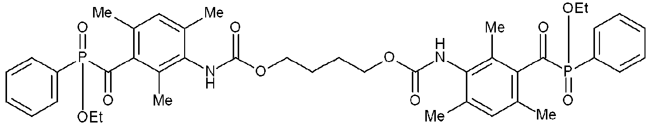 | |

The UV curable composition may be a colourless composition such as a colourless UV curable ink or inkjet ink, but preferably it contains a colorant. Colourless UV curable (inkjet) inks may be used, for example, as a protective varnish or as a primer to improve adhesion of a printed image to a substrate.

In addition to a colorant, the UV curable composition may include other ingredients as desired, such as surfactants, dispersants, dispersion synergists, stabilizers, UV absorbers and the like.

The UV curable composition is preferably a UV curable ink, but more preferably a UV curable inkjet ink.

For having a good ejecting ability, the viscosity of the UV curable inkjet ink at the jetting temperature is preferably smaller than 30.0 mPa.s, more preferably smaller than 20.0 mPa.s, most preferably between 5.0 and 16.0 mPa.s at a shear rate of 1000 s⁻¹ and at a jetting temperature between 30 and 70°C, preferably at a temperature of 45°C.

The surface tension of the UV curable inkjet ink is preferably in the range of 20 mN/m to 35 mN/m at 25°C, more preferably in the range of about 22 mN/m to about 30 mN/m at 25°C. In these ranges, good ink spreading is obtained on a wide range of substrates.

A single UV curable inkjet ink can be used, but preferably a UV curable inkjet ink set containing a plurality of differently coloured inkjet inks in accordance with the invention is used.

For printing multi-colour images, the UV curable inkjet ink is preferably part of a UV curable inkjet ink set containing at least three but most preferably at least four UV curable inkjet inks in accordance with the invention. Such an inkjet ink set is preferably a UV curable CMYK or CRYK inkjet ink set, preferably further including a UV curable white inkjet ink, for example, for enhancing colour vibrancy. This inkjet ink set may also be extended with extra inks such as violet, green, red, blue, and/or orange to further enlarge the colour gamut of the image.

The UV curable inkjet ink set can be enhanced by combining full density inkjet inks with light density inkjet inks. Full density inkjet inks match the colour of their light density counterparts but contain more (of the same) colorant. Full and light-density inks are sometimes referred to as dark and light colour inks, respectively. The combination of such dark and light colour inks, such as black and grey inks, improves the image quality by a lowered graininess.

The UV curable inkjet inks described in the invention have an improved smell, making them highly suitable for indoor decoration applications. Low odour is essential when manufacturing indoor decorative articles for rooms and vehicles, such as furniture, wallpaper, doors, natural leather articles, textile fabrics and decorative panels such as flooring laminate panels.

For reproducing wood patterns with a glossy finish, a CRYK ink set is preferred over a CMYK ink set, particularly for achieving a large color gamut and good metamerism. In a preferred embodiment of such a UV curable inkjet ink set, the ink set includes: a cyan UV curable inkjet ink containing a beta-copper phthalocyanine pigment; a red UV curable inkjet ink containing a pigment selected from the group consisting of C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272 and mixed crystals thereof; a yellow UV curable inkjet ink containing a pigment selected from C.I. Pigment Yellow 74 C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 and mixed crystals thereof; and a black UV curable inkjet ink containing a carbon black pigment; preferably complemented by a white UV curable inkjet ink and/or a colourless UV curable inkjet ink. For an improvement in graininess, the ink set may contain full- and light-density UV curable inkjet inks.

When more vibrant colours are desired, the red UV curable inkjet ink is replaced by or supplemented with a magenta UV curable inkjet ink. This magenta ink preferably contains a pigment selected from the group consisting of C.I. Pigment Violet 19 and its mixed crystals.

The above-described APO photoinitiator is preferably present in an amount between 1 and 30 wt%, more preferably 2 and 25 wt%, most preferably between 5 and 20 wt%, with the wt% based on the total weight of the UV curable composition or (inkjet) ink.

The UV curable composition or (inkjet) ink preferably contains 10 to 95 wt% of polymerizable compounds, including the mixture of free radical polymerizable monomers, with the wt% based on the total weight of the UV curable composition or (inkjet) ink. For better curability, a range of 20% to 90% by mass is more preferable.

### Free Radical Polymerizable Monomers

There is no limitation on the type of free radical polymerizable monomers used in the UV curable compositions and (inkjet) inks of the invention. The free radical polymerizable compound is preferably an ethylenically unsaturated compound. The free radical polymerizable chemistry may be a (meth)acrylate based polymerizable chemistry, but may for instance also be a thiol-ene and/or thiol-yne polymerizable chemistry. Suitable polymerizable monomers may be any monomer found in the Polymer Handbook Vol 1 + 2, 4th edition, edited by J. BRANDRUP et al., Wiley-Interscience, 1999.

In this invention, a mixture of free radical polymerizable monomers is utilized. These monomers can have varying degrees of functionality, including mono-, di-, tri-, and higher functionality monomers. Such a mixture allows for fine-tuning the viscosity of the UV curable composition based on the properties of the APO photoinitiator, which is especially relevant for UV curable inkjet inks.

A monofunctional monomer is typically used to enhance the flexibility of a cured layer, while a polyfunctional monomer is employed to improve its scratch resistance.

A monofunctional monomer contains a single free radical polymerizable group preferably selected from the group consisting of an acrylate, a methacrylate, an acrylamide, a methacrylamide, a styrene group, a maleate, a fumarate, an itaconate, a vinyl ether, a vinyl ester, an allyl ether and an allyl ester.

A polyfunctional polymerizable compound contains two, three or more free radical polymerizable groups preferably independently selected from the group consisting of an acrylate, a methacrylate, an acrylamide, a methacrylamide, a styrene group, a maleate, a fumarate, an itaconate, a vinyl ether, a vinyl ester, an allyl ether and an allyl ester.

In a preferred embodiment, the monofunctional monomers are selected from acrylic acid, methacrylic acid, maleic acid (or there salts), maleic anhydride, alkyl(meth)acrylates (linear, branched and cycloalkyl) such as methyl(meth)acrylate, n-butyl(meth)acrylate, tert-butyl(meth)acrylate, cyclohexyl(meth)acrylate, and 2-ethylhexyl(meth)acrylate; aryl(meth)acrylates such as benzyl(meth)acrylate, and phenyl(meth)acrylate; hydroxyalkyl(meth)acrylates such as hydroxyethyl(meth)acrylate, and hydroxypropyl(meth)acrylate; (meth)acrylates with other types of functionalities (e.g. oxiranes, amino, fluoro, polyethylene oxide, phosphate substituted) such as glycidyl (meth)acrylate, dimethylaminoethyl(meth)acrylate, trifluoroethyl acrylate, methoxypolyethyleneglycol (meth)acrylate, and tripropyleneglycol (meth)acrylate phosphate; allyl derivatives such as allyl glycidyl ether; styrenics such as styrene, 4-methylstyrene, 4-hydroxystyrene, 4-acetostyrene, and styrenesulfonic acid; (meth)acrylonitrile; (meth)acrylamides (including N-mono and N,N-disubstituted) such as N-benzyl (meth)acrylamide; maleimides such as N-phenyl maleimide; vinyl derivatives such as vinylcaprolactam, vinylpyrrolidone, vinylimidazole, vinylnapthalene, and vinyl halides; vinylethers such as vinylmethyl ether; vinylesters of carboxylic acids such as vinylacetate, vinylbutyrate, and vinyl benzoate.

In a preferred embodiment, the polyfunctional acrylates are selected from diethylene glycol diacrylate, triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethylol-tricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate, alkoxylated cyclohexanone dimethanol diacrylate, alkoxylated hexanediol diacrylate, dioxane glycol diacrylate, cyclohexane dimethanol diacrylate, diethylene glycol diacrylate, 3-methyl 1,5-pentanediol diacrylate, neopentyl glycol diacrylate, polytetramethylene glycol diacrylate, trimethylolpropane triacrylate, EO modified trimethylolpropane triacrylate, tri (propylene glycol) triacrylate, caprolactone modified trimethylolpropane triacrylate, propoxylated glycerine triacrylate, propoxylated trimethylolpropane triacrylate, ditrimethylolpropane tetraacrylate, dipentaerythritol pentaacrylate, ethoxylated pentaerythritol tetraacrylate, pentaerythritol triacrylate, pentaerythritol tetraacrylate, pentaerythritolethoxy tetraacrylate, dipentaerythritol hexaacrylate, ditrimethylolpropane tetraacrylate, glycerolpropoxy triacrylate, and caprolactam modified dipentaerythritol hexaacrylate. Also the methacrylate counterparts of the polyfunctional acrylates may be used.

A particularly preferred polyfunctional acrylate is a polymerizable compound having two different polymerizable groups, such as a vinylether group and an acrylate group. Preferred vinylether (meth)acrylates are those disclosed in US 6310115 (AGFA) and in columns 3 and 4 of US 67679890 B (NIPPON SHOKUBAI).A particularly preferred compound is 2- (2'-vinyloxyethoxy)ethyl acrylate (VEEA). VEEA is especially to achieve a high curing degree.

A preferred UV curable inkjet ink for indoor decoration applications comprises the above-described APO photoinitiator and a mixture of free radical polymerizable monomers comprising of: a) 7 - 70 wt%, preferably 15 - 60 wt% and most preferably 25 - 50 wt% of 2- (2'-vinyloxyethoxy)ethyl acrylate b) 1 - 65 wt%, preferably 20 - 60 wt% of one or more polymerizable compounds selected from the group consisting of monofunctional acrylates and difunctional acrylates; and c) 0 - 55 wt% of one or more polymerizable compounds selected from the group consisting of trifunctional acrylates, tetrafunctional acrylates, pentafunctional acrylates and hexafunctional acrylates,
wherein all weight percentages of A, B and C are based upon the total weight of the polymerizable composition of the UV curable inkjet ink. In general, the cured products of these UV curable inkjet inks exhibit a more pleasant odour.

Acrylates of the aforementioned monofunctional or polyfunctional monomers are preferred over their methacrylate counterparts due to their generally higher curing speed.

In a preferred embodiment, the monomer mixture of the UV curable composition or (inkjet)ink includes an N-vinyllactam, such as N-vinylcaprolactam. Another particularly preferred monomer is vinyl methyl oxazolidinone, available as VMOX from BASF. These monomers are favored because they provide excellent ink curability and adhesion of the cured film to a recording medium.

In a preferred embodiment of the UV curable composition, the mixture of the free radical polymerizable monomers contain at least one of N-vinyl caprolactam, vinyl methyl oxazolidinone and (2'-vinyloxyethoxy)ethyl acrylate.

A particular preferred mixture of free radical polymerizable monomers includes one, two or more monofunctional monomers selected from the group consisting of hexyl (meth)acrylate, 2-ethylhexyl (meth)acrylate, tert-octyl (meth)acrylate, isoamyl (meth)acrylate, decyl (meth)acrylate, isodecyl (meth)acrylate, stearyl (meth)acrylate, isostearyl (meth)acrylate, cyclohexyl (meth)acrylate, 4-n-butylcyclohexyl (meth)acrylate, tert.-butylcyclohexyl (meth)acrylate, bornyl (meth)acrylate, isobornyl (meth)acrylate, benzyl (meth)acrylate, 2-ethylhexyldiglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxybutyl (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, oligoethylene oxide monomethyl ether (meth)acrylate, polyethylene oxide (meth)acrylate, oligoethylene oxide (meth)acrylate, oligoethylene oxide monoalkyl ether (meth)acrylate, polyethylene oxide monoalkyl ether (meth)acrylate, dipropylene glycol (meth)acrylate, polypropylene oxide monoalkyl ether (meth)acrylate, oligopropylene oxide monoalkyl ether (meth)acrylate, 2-methacryloyloxyethylsuccinic acid, 2-methacryloyloxyhexahydrophthalic acid, 2-methacryloyloxyethyl-2-hydroxypropyl phthalate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide (EO)-modified phenol (meth)acrylate, EO-modified cresol (meth)acrylate, EO-modified nonyl phenol (meth)acrylate, propylene oxide (PO)-modified nonyl phenol (meth)acrylate, EO-modified 2-ethylhexyl (meth)acrylate, dicyclopentenyl (meth)acrylate, dicyclopentenyl oxy ethyl (meth)acrylate, an dicyclopentanyl (meth)acrylate, (3-ethyl-3-oxetanyl methyl) (meth)acrylate, and phenoxyethylene glycol (meth)acrylate.

A particular preferred mixture of free radical polymerizable monomers includes one, two or more polyfunctional monomers selected from the group consisting of 1,6-hexanediol di(meth)acrylate, 1,10-decanediol di(meth)acrylate, neopentyl glycol di(meth)acrylate, 2,4-dimethyl-1,5-pentanediol di(meth)acrylate, 3-methyl-1,5-pentanediol di(meth)acrylate, butylethylpropanediol di(meth)acrylate, ethoxylated cyclohexane methanol di(meth)acrylate, polyethylene glycol di(meth)acrylate, oligoethylene glycol di(meth)acrylate, ethylene glycol di(meth)acrylate, 2-ethyl-2-butyl-butanediol di(meth)acrylate, hydroxypivalic acid neopentyl glycol di(meth)acrylate, EO-modified bisphenol A di(meth)acrylate, bisphenol F polyethoxy di(meth)acrylate, polypropylene glycol di(meth)acrylate, oligopropylene glycol di(meth)acrylate, 1,4-butanediol di(meth)acrylate, 2-ethyl-2-butylpropanediol di(meth)acrylate, 1,9-nonane di(meth)acrylate, propoxylated ethoxylated bisphenol A di(meth)acrylate, tricyclodecane di(meth)acrylate, dipropylene glycol di(meth)acrylate, tripropylene glycol di(meth)acrylate, PO-modified neopentyl glycol di(meth)acrylate, trimethylolpropane tri(meth)acrylate, trimethylolethane tri(meth)acrylate, trimethylolpropane alkylene oxide-modified tri(meth)acrylate, pentaerythritol tri(meth)acrylate, dipentaerythritol tri(meth)acrylate, trimethylolpropane tri((meth)acryloyloxypropyl)ether, isocyanuric acid alkylene oxide-modified tri(meth)acrylate, propionic acid dipentaerythritol tri(meth)acrylate, tri((meth)acryloyloxyethyl) isocyanurate, hydroxypival aldehyde-modified dimethylolpropane tri(meth)acrylate, sorbitol tri(meth)acrylate, propoxylated trimethylolpropane tri(meth)acrylate, ethoxylated glycerin triacrylate, pentaerythritol tetra(meth)acrylate, sorbitol tetra(meth)acrylate, ditrimethylolpropane tetra(meth)acrylate, propionic acid dipentaerythritol tetra(meth)acrylate, ethoxylated pentaerythritol tetra(meth)acrylate, sorbitol penta(meth)acrylate and dipentaerythritol penta(meth)acrylate, dipentaerythritol hexa(meth)acrylate, sorbitol hexa(meth)acrylate, phosphazene alkylene oxide-modified hexa(meth)acrylate, and ε-caprolactone-modified dipentaerythritol hexa(meth)acrylate.

The mixture of free radical polymerizable monomers may also include a (meth)acrylamide compound selected from the group consisting of (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide, and (meth)acryloyl morpholine.

Another preferred alternative free radical curing chemistry is the so-called thiol-ene and thiol-yne chemistry. In such a chemistry, a combination of at least one polyfunctional thiol monomer and at least one polyfunctional polymerizable monomer is used. The polyfunctional polymerizable monomer is preferably a polyfunctional monomer having a plurality of polymerizable groups selected from a group consisting of a vinyl group, an acrylamide group, a methacrylamide group, a vinyl carbonate group, a vinyl ether group, a vinyl ester group, a vinyl carbamate group, an allyl ether groups, an allyl ester group and an alkyne group. Particularly preferred are polymerizable compounds including allyl ether groups, vinyl carbonate groups and alkyne groups.

Synthesis of such monomers is disclosed in the relevant literature, for example in HURD, Charles D.. Vinylation and the Formation of Acylals. Journal Am. Chem.Soc. 1956, vol.78, no.1, p.104_106. ; LOBELL, M., et al. Synthesis of hydroxycarboxylic acid vinyl esters. MP Synthesis. 1994, vol.4, p.375-377. ; LEE, T. Y., et al. Synthesis, Initiation, and Polymerization of Photoinitiating Monomer. Macromolecules. 2005, vol.38, no.18, p.7529-7531. ; ATTA, A.M., et al. New vinyl ester resins based on rosin for coating applications. React. Funct. Polym.. 2006, vol.66, p.1596-1608. ; WO 01/00634 A (WRIGHT CHEM CORP) ; and ROHR, Marcus, et al. Solvent-free ruthenium-catalysed vinylcarbamate synthesis from phenylacetylene and diethylamine in 'supercritical' carbon dioxide. Green Chemistry. 2001, vol.3, p.123-125.

### Other Photoinitiators and Co-initiators

The APO photoinitiator can be used as a single photoinitiator in the UV curable composition or (inkjet) ink. Alternatively, it may be combined with other photoinitiators and/or a-co-initiators to form a photoinitiating system in the UV curable composition or (inkjet) ink.

The other photoinitiator(s) may be a Norrish type I initiator and/or a Norrish type II initiator. A Norrish Type I initiator is a photoinitiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator.

Suitable Norrish type I and II photo-initiators are disclosed in CRIVELLO, J.V., et al. VOLUME III: Photoinitiators for Free Radical Cationic & Anionic Photopolymerisation. 2nd edition. Edited by BRADLEY, G.. London,UK: John Wiley and Sons Ltd, 1998. p.287-294.

The APO photoinitiator may be combined with a photoinitiator selected from the group consisting of another acyl phosphine oxide initiator a thioxanthone initiator, an α-hydroxyalkylphenone initiator and a carbazole initiator. Such combinations can improve curing speed further.

In order to increase the photosensitivity further, a co-initiator may be added, which preferably is an amine synergist.

Suitable examples of amine synergists can be categorized in three groups:
1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The total amount of photoinitiator used is preferably an amount of 1 to 30 wt%, more preferably 2 to 20 wt%, and most preferably 5 to 15 wt%, based on the total weight of the UV curable composition or (inkjet) ink.

### Other Free Radical Polymerizable Compounds

The mixture of free radical polymerizable monomers in the UV curable composition or (inkjet) ink may be supplemented by polymerizable oligomers and/or polymerizable polymers. In the present disclosure, the oligomer has preferably a weight-average molecular weight of 500 or more and 20,000 or less, and the polymer has preferably a weight-average molecular weight of more than 20,000.

Preferred free radical polymerizable oligomers and polymers are polyurethanes, polyesters, polyethers, polycarbonates, poly-carbamates, polyureas and straight-chain oligomers having the following polymerizable groups: acrylate, methacrylate, vinyl, acrylamide, methacrylamide, vinyl carbonate, vinyl ether, vinylester- vinyl carbamate groups, as well as their corresponding alkene and alkyne compounds.

A urethane (meth)acrylate oligomer is particularly preferred for free radical polymerization due to its excellent abrasion resistance, flexibility, and chemical resistance in the resulting cured product.

The urethane (meth)acrylate oligomer may be a compound having one or more urethane bonds and having one or more (meth)acrylate groups.

It is preferable to use a bifunctional urethane (meth)acrylate oligomer having a weight-average molecular weight between 3,000 and 20,000 to ensure optimal abrasion resistance, flexibility, and chemical resistance in the cured product.

As the bifunctional urethane (meth)acrylate oligomer, a commercially available product may be used. Examples of the commercially available product include CN963B80 and CN9001 (manufactured by ARKEMA and SHIKO UV-3200B, SHIKO UV-3300B, SHIKO UV-3310B, and SHIKO UV-6630B (all manufactured by The Nippon Synthetic Chemical Industry Co., Ltd.).

The content of the urethane (meth)acrylate oligomer in the UV curable composition and (inkjet) ink according to the present disclosure is preferably 1% by mass or more and 30% by mass or less, more preferably 3% by mass or more and 20% by mass or less, and particularly preferably 5% by mass or more and 10% by mass or less with respect to the total mass of the composition from the viewpoint of the abrasion resistance, flexibility, and chemical resistance of the obtained cured product.

### Colorants

The UV curable composition may contain a colorant. The colorant may be a dye, a pigment or a combination thereof. Organic and/or inorganic pigments may be used. The colorant is preferably a pigment or a polymeric dye, most preferably an organic colour pigment. Organic colour pigments generally allow to obtain a much broader colour gamut. However, for the colours white and black, preferably inorganic pigments such as titanium dioxide respectively carbon black are used.

The pigments may be black, white, cyan, magenta, yellow, red, orange, violet, blue, green, brown, mixtures thereof, and the like. This colour pigment may be chosen from those disclosed by HERBST, Willy, et al. Industrial Organic Pigments, Production, Properties, Applications. 3rd edition. Wiley - VCH , 2004. ISBN 3527305769.

A preferred pigment for a UV curable cyan (inkjet) ink according to the invention is a beta-copper phthalocyanine pigment, with C.I. Pigment Blue 15:3 or 15:4 being particularly preferred for minimal light fading of the cured product.

The pigments mentioned above for the red and tallow inks in CRYK ink set may also be used for (inkjet) inks in a different ink set.

The pigment in a magenta UV curable (inkjet) ink is preferably C.I. Pigment Violet 19 or a mixed crystal thereof.

In a black UV curable (inkjet) ink according to the invention, the pigment is preferably a carbon black pigment. Suitable black pigments include carbon blacks such as Pigment Black 7 (e.g. Carbon Black MA8^{™} from MITSUBISHI CHEMICAL), Regal^{™} 400R, Mogul^{™} L, Elftex^{™} 320 from CABOT Co., or Carbon Black FW18, Special Black 250, Special Black 350, Special Black 550, Printex^{™} 25, Printex^{™} 35, Printex^{™} 55, Printex^{™} 90, Printex^{™} 150T from EVONIK. In a preferred embodiment, the carbon black pigment used is a pigment having less than 0.15% of toluene-extractable fraction using the method as described in section III, paragraph 5 of the Resolution AP(89) 1 dated 13 September 1989 published by the Council of Europe.

It is also possible to include mixtures of pigments in the UV curable (inkjet) ink. For example, in some inkjet ink application a neutral black inkjet ink is preferred and can be obtained, for instance, by mixing a black pigment and a cyan and/or magenta pigment into the ink. Also pigments may be combined to enlarge the colour gamut of an ink set.

An inkjet ink set may also include one or more spot colours. Silver and gold are often desired colours for making a product more attractive by giving it an exclusive appearance.

Suitable pigments include mixed crystals of the above preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia^{™} Magenta L 4540 from SUN CHEMICAL.

Pigment particles in inkjet ink should be sufficiently small to permit free flow of the ink through the inkjet-printing device, especially at the ejecting nozzles. It is also desirable to use small particles for maximum colour strength and to slow down sedimentation. The numeric average pigment particle size is preferably between 0.050 and 1 µm, more preferably between 0.070 and 0.300 µm and particularly preferably between 0.080 and 0.200 µm.

The numeric average pigment particle size of pigment particles is best determined with a Brookhaven Instruments Particle Sizer BI90plus based upon the principle of dynamic light scattering. The ink is then diluted, for example, with ethyl acetate to a pigment concentration of 0.002 wt%. The measurement settings of the BI90plus are: 5 runs at 23°C, angle of 90°, wavelength of 635 nm and graphics = correction function.

In the case of a UV curable white (inkjet) ink according to the invention, preferably a pigment with a refractive index greater than 1.60, preferably greater than 2.00, more preferably greater than 2.50 and most preferably greater than 2.60 is used. The white pigments may be employed singly or in combination.

In a coloured inkjet ink the pigment is preferably present in an amount of 0.1 to 13.0 wt%. A dark colour inkjet ink preferably contains 1.5 to 13.0 wt%, more preferably 1.8 to 6.0 wt% of colour pigment based on the total weight of the inkjet ink, while a light colour inkjet ink preferably contains 0.1 to 1.3 wt%, more preferably 0.3 to 1.2 wt% of colour pigment based on the total weight of the inkjet ink.

A white inkjet ink preferably contains more than 13.0 wt%, more preferably 15.0 to 25.0 wt% of a white pigment based on the total weight of the inkjet ink.

### Dispersants

The UV curable (inkjet) ink preferably contains a dispersant for further improving pigment dispersion properties. For obtaining high printing reliability, the dispersant is preferably a polymeric dispersant. Such dispersant improves the reliability of an inkjet printing process due to a generally smaller sedimentation speed, especially when the dispersant contains secondary or tertiary amine groups.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following: DISPERBYK^{™} dispersants available from BYK CHEMIE GMBH; SOLSPERSE^{™} dispersants available from LUBRIZOL; TEGO^{™} DISPERS^{™} dispersants from EVONIK; EDAPLAN^{™} dispersants from MÜNZING CHEMIE; ETHACRYL^{™} dispersants from LYONDELL; GANEX^{™} dispersants from ISP; DISPEX^{™} and EFKA^{™} dispersants from BASF; and DISPONER^{™} dispersants from DEUCHEM.

The dispersants may be used alone or in combination of two or more kinds thereof.

The polymeric dispersant is preferably used in an amount of 10 to 200 wt%, more preferably 20 to 100 wt%, most preferably 50 to 90 wt% based on the weight of the pigment.

### Dispersion Synergists

The UV curable inkjet ink may include a dispersion synergist to further improve the dispersion stability by a polymeric dispersant and thus also the printing reliability as less pigment can sediment in the nozzle of a print head upon stand-by of an inkjet device.

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.

Suitable dispersion synergists that are commercially available include Solsperse^{™} 5000 and Solsperse^{™} 22000 from LUBRIZOL. Suitable dispersion synergists for a diketopyrrolo-pyrrole pigment, a quinacridone pigment or a mixed crystal thereof include those disclosed in EP 1790698 A (AGFA GRAPHICS) , EP 1790696 A (AGFA GRAPHICS) , WO 2007/060255 (AGFA GRAPHICS) and EP 1790695 A (AGFA GRAPHICS).

In dispersing C.I. Pigment Blue 15:3, the use of a sulfonated Cu-phthalocyanine dispersion synergist, e.g. Solsperse^{™} 5000 from LUBRIZOL is preferred.

### Stabilizers

The UV curable (inkjet) ink may also contain a stabilizer, often referred to as a polymerization inhibitor. Due to the fact that an ink contains the polymerization inhibitor, a polymerization reaction before curing, such as during storage or transport, can be prevented. It can also improve the printing reliability. For example, a UV LED UV curable inkjet ink in a print head of an inkjet device is usually kept at a higher temperature such as 45 to 55°C.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, α-naphthol, 3,5-di-t-butyl-4-hydroxytoluene, 2,6-di-t-butyl-4-methylphenol, 2,2'-methylene-bis(4-methyl-6-t-butylphenol), 2,2'-methylene-bis(4-ethyl-6-butylphenol), and 4,4'-thio-bis(3-methyl-6-t-butylphenol) and pyrogallol.

Suitable commercial inhibitors are, for example, Sumilizer^{™} GA-80, Sumilizer^{™} GM and Sumilizer^{™} GS produced by Sumitomo Chemical Co. Ltd.; Genorad^{™} 16, Genorad^{™} 18 and Genorad^{™} 20 from Rahn AG; Irgastab^{™} UV10 and Irgastab^{™} UV22, Tinuvin^{™} 460 and CGS20 from Ciba Specialty Chemicals; Floorstab^{™} UV range (UV-1, UV-2, UV-5 and UV-8) from Kromachem Ltd, Additol^{™} S range (S100, S110, S120 and S130) from Cytec Surface Specialties.

A preferred polymerization inhibitor is Irgastab^{™} UV10 from BASF. Other examples of polymerization inhibitor include TEMPO, TEMPOL, and Al cupferron.

The polymerization inhibitors may be used alone or in combination of two or more kinds thereof. In a preferred embodiment, the polymerization inhibitor is a mixture of different types of polymerization inhibitors.

Preferred polymerization inhibitors are mixtures of an oxyl free radical-based polymerization inhibitor, a phenol-based polymerization inhibitor, and an amine-based polymerization inhibitor.

Suitable examples are given in EP 2851402 A (FUJIFILM) . The polymerization inhibitor is preferably present in an amount of 0.1 to 5 wt% based on the total weight of the free radical curable (inkjet) ink. Below 0.1 wt%, the undesired polymerization is insufficiently inhibited and above 5 wt% the curing speed is heavily reduced.

### Surfactants

The UV curable inkjet ink may contain a surfactant. The surfactant can be anionic, cationic, non-ionic, or zwitter-ionic. The surfactant is preferably present in an amount of 0.1 to 3 wt% based on the total weight of the free radical curable inkjet ink. At higher concentrations than 3 wt%, the adhesion may deteriorate rapidly, while usually insufficient spreading of the ink is observed at concentration lower than 0.1 wt%.

The total quantity of surfactant is preferably less than 3 wt% based on the total weight of the ink and more preferably less than 1.5 wt% based on the total weight of the UV curable inkjet ink to prevent foaming of the ink in its container. Such foaming has a negative impact on the printing reliability.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK^{™} 333 and BYK^{™} UV3510 from BYK Chemie and Tegoglide^{™} 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates. In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl^{™} 350 , a silicone diacrylate from Cytec; the polyether modified acrylated polydimethylsiloxane BYK^{™} UV3500, BYK^{™} UV3510 and BYK^{™} UV3530, the polyester modified acrylated polydimethylsiloxane BYK^{™} UV3570, all manufactured by BYK Chemie; Tego^{™} Rad 2100, Tego^{™} Rad 2200N, Tego^{™} Rad 2250N, Tego^{™} Rad 2300, Tego^{™} Rad 2500, Tego^{™} Rad 2600, Tego^{™} Rad 2700, and Tego^{™} RC711 all manufactured by EVONIK. Another preferred silicone is Silwet^{™} L7500 from OSI SPECIALITIES BENELUX NV; Silaplane^{™} FM7711, Silaplane^{™} FM7721, Silaplane^{™} FM7731, Silaplane^{™} FM0711, Silaplane^{™} FM0721, Silaplane^{™} FM0725, Silaplane^{™} TM0701, Silaplane^{™} TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

Particularly preferred surfactants for the free radical inkjet ink are Silmer^{™} surfactants from SILTECH CORPORATION, such as Silmer^{™} ACR Di-1508

### Preparation of UV Curable Inks and Inkjet Inks

The preparation of UV curable (inkjet) inks is well-known to the skilled person.

The average particle size and distribution of a colour pigment is an important feature for inkjet inks. The inkjet ink may be prepared by precipitating or milling the pigment in the dispersion medium in the presence of a dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy or using a microfluidizer.

Different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is performed with cooling to prevent build-up of heat and as much as possible under light conditions in which actinic radiation has been substantially excluded.

The (inkjet) ink may contain more than one pigment, and may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary depending upon the specific materials and the intended applications. The contents of the milling mixture comprise the mill grind and the milling media. The mill grind comprises pigment, polymeric dispersant and a liquid carrier. For inkjet inks, the pigment is usually present in the mill grind at 5 to 50 wt%, excluding the milling media. The weight ratio of pigment over polymeric dispersant is preferably 20:1 to 1:2, more preferably 2:1 to 1:1.

The optimal milling time can vary and depends upon the pigment, mechanical means and residence conditions selected, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, such as for a bead mill. The milled pigment concentrate is preferably separated from the milling media by filtration.

In general, it is desirable to make the Inkjet inks in the form of a concentrated pigment dispersion, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for a particular application.

### Cured Products

Another aspect of the invention is a cured product formed by UV curing the UV curable composition or (inkjet) ink in accordance with the invention on a substrate .

The cured product is preferably a printed article comprising a cured composition derived from the UV curable composition as described above.

There are no specific limitations on the nature of the printed articles, which can be either 3D-printed or printed on a substrate.

In a preferred embodiment, the printed article is selected from printed packaging, printed leather articles, and printed interior decoration articles.

More preferably, the printed article is produced using inkjet printing technology, which facilitates customization and personalization.

Printed packaging includes articles made from corrugated cardboard or folded carton.

Preferred printed leather articles are those made from natural leather.

Printed interior decoration articles include laminate products such as luxury vinyl tiles. However, the UV curable (inkjet) inks may also be directly printed on an article such as furniture or doors.

There are no limitations on the substrates for printing UV-curable (inkjet) inks; they can be plastic, metal, wood, or cellulose-based.

### Inkjet Printing Methods

An inkjet printing method in accordance with the invention preferably comprising the steps of:
a) jetting an image with a UV curable inkjet ink on a substrate; and
b) curing the jetted image by UV light emitting diodes.

The UV curing is preferably performed by UV LEDs having an emission wavelength larger than 360 nm, preferably larger than 370 nm and most preferably between 390 and 400 nm.

The UV curable inkjet ink is jetted by one more print heads ejecting small droplets in a controlled manner through nozzles onto a substrate moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink. When the voltage is again removed, the ceramic expands to its original shape, ejecting a drop of ink from the print head. Piezoelectric print heads have proven to be the most reliable print heads in industrial printing.

A preferred piezoelectric print head is a so-called push mode type piezoelectric print head, which has a rather large piezo-element capable of ejecting also high viscous inkjet ink droplets. Such a print head is available from RICOH as the GEN5s print head.

A more preferred piezoelectric print head is a so-called through-flow piezoelectric drop-on-demand print head. Such a print head is, for instance available from TOSHIBA TEC as the CF1ou print head or from FUJIFILM DIMATIX as Samba^{™} G3L and G5L printheads. Through-flow print heads are preferred because they enhance the reliability of inkjet printing due to the ink circulation within the print head.

The inkjet print head preferably scans back and forth in a transversal direction across the moving ink-receiver surface. The inkjet print head may not print on the way back, but bi-directional printing is preferred for obtaining a high areal throughput. For maximizing high areal throughput, another printing method may be used that is known as a "single pass printing process", which can be performed by using page wide inkjet print heads or multiple staggered inkjet print heads that cover the entire width of the ink-receiver surface. In a single pass printing process the inkjet print heads usually remain stationary and the ink-receiver surface is transported under the inkjet print heads.

However, the inkjet printing of the UV curable inkjet inks is more preferably performed in a multi-pass printing mode. Multi-pass printing is a very suitable technique to reduce banding in ink-jet printing or mask nozzle failure which may occur in single pass inkjet printings. Dots of ink, when still in liquid form, tend to run together due to surface tension. This is referred to as coalescence. To print a high quality image, it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is to 2 to 6 passes, more preferably no more than 4 passes.

An advantage of using a multi-pass printing mode is that the UV curable inkjet inks are cured in consecutive passes, rather than in a single pass which would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

For facilitating curing, the inkjet printer may include one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Methods

### Gloss

The gloss of a sample was measured using Zehntner^{™} ZGM 1120 gloss device using an 85° geometry.

### Solubility

In order to determine the solubility as a measure for the formulation latitude, an ink carrier was prepared by mixing the components according to Table 2. All amounts are expressed in weight percentages on the total weight of the ink carrier composition.

**Table 2**

| **Component** | **wt%** |
|---|---|
| HDDA | 5 |
| DPGDA | 2 |
| VEEA | 9 |
| IDA | 11 |
| PEA | 31 |
| IBOA | 21 |
| VCL | 21 |

A target 8 wt% solution of each photoinitiator under consideration is formulated into the ink carrier by stirring the required amount for 24 hours in the carrier at room temperature. When the photoinitiator was not completely dissolved, the residue was isolated by filtration, washed twice with a mixture of 25 vol% n.-hexane and 75 vol% methyl tert. butyl ether and dried under vacuum for two hours at 2 mBar at room temperature. The residue was weighed and compared to the initial target amount to get a clear view on the solubility. This approach is illustrated here below by the determination of the solubility of COMPINI-2.

0.465 g of COMPINI-2 was added to 5.348 g of the carrier mixture and the mixture was stirred for 24 hours. The residue was isolated by filtration, washed twice with a mixture of 25v% n.-hexane and 75 v% methyl tert. butyl ether and dried under vacuum for two hours at 2 mBar. 0.327 g of COMPINI-2 was isolated which corresponds to 70% of the target amount that remains undissolved in the carrier.

### Materials

All materials used in the following examples were readily available from standard sources such the Sigma-Aldrich (MERCK) and Acros Organics (THERMOFISHER SCIENTIFIC) unless otherwise specified. Any water used was demineralized water.

**HDDA** is 1,6-hexanediol diacrylate, supplied by ARKEMA as Sartomer^{™} SR238.

**DPGDA** is dipropylene glycol diacrylate, supplied by ARKEMA as Sartomer^{™} SR508.

**VEEA** is 2-(2-vinyloxyethoxy)ethyl acrylate, supplied by Nippon Shokubai Japan.

**IDA** is isodecyl acrylate, supplied by ARKEMA as Sartomer^{™} SR395.

**PEA** is 2-phenoxyethyl acrylate, supplied by ARKEMA as Sartomer^{™} SR339.

**IBOA** is isobornyl acrylate, supplied by ARKEMA as Sartomer^{™} SR506D.

**VCL** is N-vinyl caprolactam, supplied by BASF.

**CN963** is a difunctional aliphatic urethane acrylate oligomer, supplied by ARKEMA as Sartomer^{™} CN963B80.

**STAB1** is Irgastab^{™} UV10, supplied by BASF

**STAB2** is a 20 w% solution of 4-methoxy-phenol in DPGDA.

**SURF-1** is Coatosil^{™} L7500, supplied by MOMENTIVE PERFORMANCES.

**TPO** is 2,4,6-trimethylbenzoyl-diphenyl-phosphineoxide, supplied by IGM Resins as Omnirad^{™} TPO.

**PB15:4** is an abbreviation used for C.I. Pigment Blue 15:4, available as Sunfast^{™} Blue 15:4, supplied by Sun and pre-sieved before dispersing the pigment.

**DB162** is an abbreviation for the polymeric dispersant Disperbyk^{™}162, available from BYK CHEMIE whereof the solvent mixture 2-methoxy-1-methylethylacetate, xylene and n.-butylacetate was removed. The polymeric dispersant is a polyester-polyurethane having an amine value of 13 mg KOH/g, a Mₙ of about 4425 and a M_{w} of about 6270.

**INHIB** is a mixture forming a polymerization inhibitor having a composition according to Table 3.

**Table 3**

| Component | wt% |
|---|---|
| DPGDA | 82.4 |
| p-methoxyphenol | 4.0 |
| BHT | 10.0 |
| Cupferron^{™} AL | 3.6 |

**BHT** is an abbreviation for 2,6-di-tert.butyl-4-methylphenol (CASRN128-37-0), supplied by Aldrich Chemical Co.

**Cupferron**^{™} **AL** is aluminium N-nitrosophenylhydroxylamine from Wako Chemical Co.

**Amino-TPO-L** is Ethyl *P*-(3-amino-2,4,6-trimethylbenzoyl)-*P*-phenyl phosphinate (CASRN2143083-29-6) was prepared according to the method described in WO 2017/191043 (AGFA GRAPHICS).

**Amino-TPO** is 3-[(diphenylphosphinyl)carbonyl]-2,4,6-trimethyl benzenamine (CASRN2771298-79-2) was prepared according to the method described in WO 2022/106100 (AGFA).

**SUB1** is Forex^{™} Classic 3mm (ref. Seric: 2232), a rigid PVC foam board from ANTALIS.

**SUB2** is Metamark^{™} MD5-100, a polymeric calendered self-adhesive vinyl available from METAMARK.

**SUB3** is DiBond^{™} White 2 mm, an aluminum composite panel from 3A COMPOSITES.

**SUB4** is lrostyrene mat, a styrene-based substrate from IROPLASTICS.

**SUB5** is Lexan^{™} PC SG305, a polycarbonate substrate from VINK NV.

**COMPINI-1** was prepared as follows:.

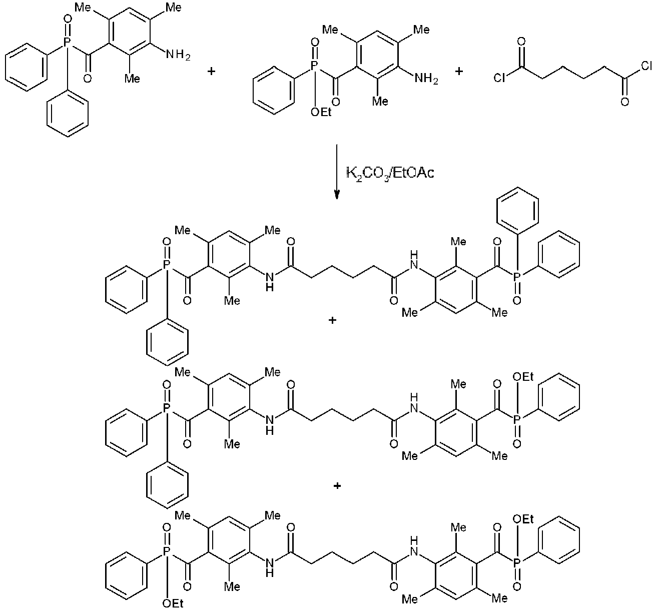

3.31 g (10 mmol) amino-TPO-L and 3.63 g (10 mmol) amino-TPO were dissolved in 46 g ethyl acetate. A solution of 3.04 g (12.5 mmol) potassium carbonate in 20 ml water was added an the reaction mixture was stirred. A solution of 2.2 g (11.5 mmol) adipoylchloride in 5 ml ethyl acetate was added over 10 minutes, while maintaining the temperature below 25°C. The reaction was allowed to continue for 16 hours at room temperature. The organic fraction was isolated, washed with 40 ml of a 0.5 M sodium chloride solution and evaporated under reduced pressure. 7.8 g (y : 97 %) COMPINI-1 was isolated (TLC analysis on a Uniplate Analtech HPTL-RP18F plate supplied by Miles Scientific : eluent MeOH/0.5 M NaCl 70/30, R_{f} : 0.09, R_{f} : 0.15, R_{f} : 0.23).

**COMPINI-2** was prepared as follows: 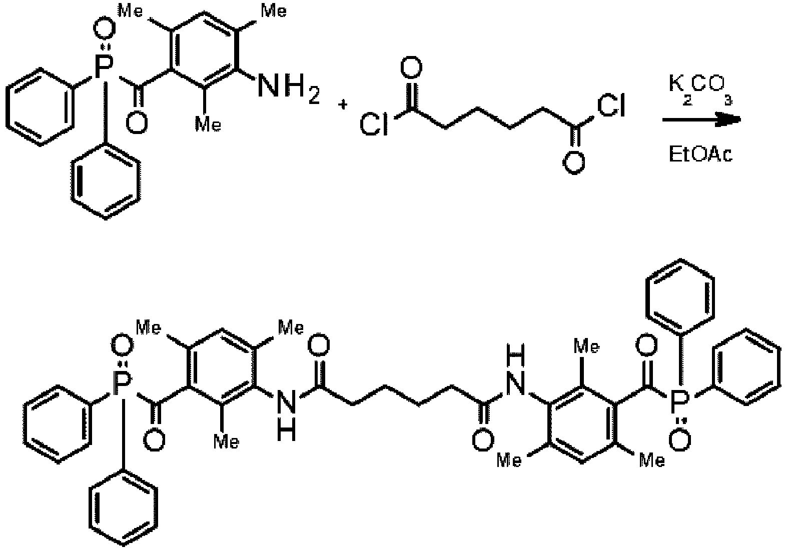 6.63 g (20 mmol) amino-TPO-L was added to 40 ml ethyl acetate. A solution of 2.9 g (21 mmol) potassium carbonate in 20 ml water was added and the reaction mixture was stirred. 1.92 g (10.2 mmol) adipoylchloride was added over 3 minutes upon which the temperature rose to 32°C. The reaction was allowed to continue for 2 hours. An additional 0.5 g (2.7 mmol) adipoylchloride was added and the reaction was allowed to continue for 30 minutes. The organic fraction was isolated, washed with 40 ml of a 0.5 M sodium chloride solution and evaporated under reduced pressure. 7.4 g (y : 96 %) of COMPINI-2 was isolated (TLC analysis on a Uniplate^{™} Analtech HPTL-RP18F plate supplied by MILES SCIENTIFIC : eluent MeOH/0.5 M NaCl 70/30, R_{f} : 0.25)

### EXAMPLE 1

This example illustrates the synthesis of APO photoinitiator DIPOL-1 for use in a UV curable composition in accordance with the invention.

### Synthesis

6.63 g (20 mmol) amino-TPO-L was added to 40 ml ethyl acetate. A solution of 2.9 g (21 mmol) potassium carbonate in 20 ml water was added and the reaction mixture was stirred. 1.92 g (10.2 mmol) adipoylchloride was added over 3 minutes upon which the temperature rose to 32°C. The reaction was allowed to continue for 2 hours. An additional 0.5 g (2.7 mmol) adipoylchloride was added and the reaction was allowed to continue for 30 minutes. The organic fraction was isolated, washed with 40 ml of a 0.5 M sodium chloride solution and evaporated under reduced pressure; 7.4 g (y : 96 %) of DIPOL-1 was isolated (TLC analysis on a Uniplate Analtech HPTL-RP18F plate supplied by Miles Scientific : eluent MeOH/0.5 M NaCl 70/30, R_{f} : 0.25)

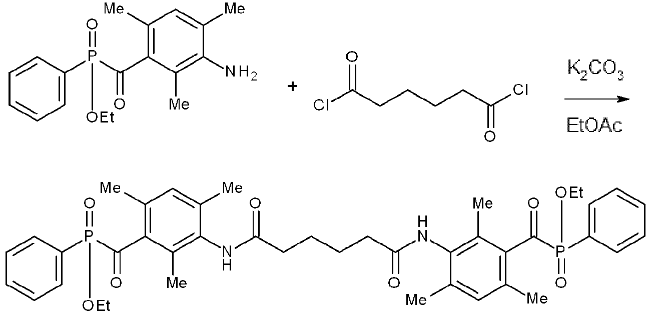

### EXAMPLE 2

This example illustrates the synthesis of APO photoinitiator DIPOL-3 for use in a UV curable composition in accordance with the invention.

### Synthesis

6.63 g (20 mmol) ethyl *P*-(3-amino-2,4,6-trimethylbenzoyl)-*P-*phenylphosphinate was dissolved in 40 ml ethyl acetate. A solution of 3.3 g (24 mmol) potassium carbonate in 50 ml water was added to the ethyl acetate phase upon which ethyl *P*-(3-amino-2,4,6-trimethylbenzoyl)-*P-*phenylphosphinate completely dissolved. The reaction mixture was cooled to 10°C and 1.76 g (10.3 mmol) diglycoloyl dichloride was added dropwise over two minutes while vigorously stirring the mixture. The temperature was maintained below 12°C during the addition. The cooling was removed and the reaction was allowed to continue for one hour at room temperature. The ethyl acetate phase was isolated, extracted with 50 ml of a 0.5 M sodium chloride solution in water, dried over MgSO₄ and evaporated under reduced pressure. 7.4 g (y : 97%) of DIPOL-3 was isolated as an off white solid (m.p. : 90°C, TLC analysis on a TLC Silica gel 60 RP-18 F₂₅₄S plate supplied by MERCK, eluent: MeOH/0.5 M NaCl 70/30 : R_{f} : 0.2).

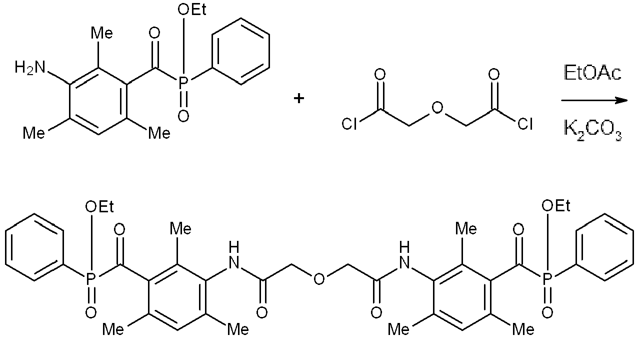

### EXAMPLE3

This example illustrates the synthesis of APO photoinitiator DIPOL-5 for use in a UV curable composition in accordance with the invention.

### Synthesis

6.63 g (20 mmol) amino-TPO-L was added to 40 ml ethyl acetate. A solution of 2.9 g (21 mmol) potassium carbonate in 50 ml water was added and the mixture was stirred. A solution of 2.43 g (10 mmol) diethyleneglycol bis(chloroformate) in 5 ml ethylacetate was added over 5 minutes upon which the temperature rose from 20 to 26°C. The reaction was allowed to continue for two hours. An additional 0.4 g (1.7 mmol) diethyleneglycol bis(chloroformate) was added and the reaction was allowed to continue for an additional hour. The organic fraction was isolated, washed with 40 ml of a 0.5 M sodium chloride solution and 20 ml water followed by evaporation of the solvent under reduced pressure. The crude DIPOL-5 was purified by preparative column chromatography on Büchi^{™} NP-Flash column using an elution starting with methylene chloride as eluent, switching to ethyl acetate after 15 minutes, followed after 15 minutes by a gradient elution to methanol over 15 minutes. The pure DIPOL-5 fractions were pooled and evaporated under reduced pressure. The isolated DIPOL-5 was recrystallized from methylene chloride/n.-hexane. 4 g (y : 49 %) of DIPOL-5 was isolated (TLC analysis on a Uniplate^{™} Analtech HPTL-RP18F plate supplied by MILES SCIENTIFIC : eluent MeOH/0.5 M NaCl 80/20, R_{f} : 0.08).

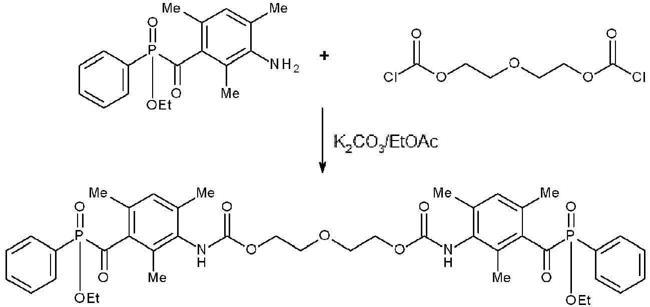

### EXAMPLE 4

This example illustrates the improvement of the gloss when using a UV curable composition according to the present invention as an inkjet ink.

### Preparation of the cyan dispersion DISP-1

A cyan pigment dispersion was made by mixing the components according to Table 4 for 30 minutes using a Disperlux^{™} dispenser form DISPERLUX S.A.R.L., Luxembourg. The dispersion was then milled using a BACHOVEN Dynomill^{™} ECM mill filled with 0.4 µm yttrium stabilized zirconia beads ("high wear resistant zirconia grinding media" from TOSOH Co.). The mixture was circulated over the mill for 2 hours. After milling, the pigment dispersion was discharged over a 1 µm filter into a vessel.

**Table 4**

| **Component** | **wt%** |
|---|---|
| PB15:4 | 25 |
| DB162 | 10 |
| INHIB-1 | 1 |
| PEA | 64 |

### Preparation of inventive and comparative ink jet inks

The comparative inkjet inks COMP-1 to COMP-3 and the inventive inkjet inks INV-1 to INV-3 were prepared by mixing the components according to Table 5. All amounts are expressed in weight percentages based on the total weight of the ink jet inks.

**Table 5**

| **wt% of** | **COMP-1** | **COMP-2** | **COMP-3** | **INV-1** | **INV-2** | **INV-3** |
|---|---|---|---|---|---|---|
| **DISP-1** | 8.00 | 8.00 | 8.00 | 8.00 | 8.00 | 8.00 |
| **HDDA** | 3.96 | 3.96 | 3.96 | 3.96 | 3.96 | 3.96 |
| **DPGDA** | 1.74 | 1.74 | 1.74 | 1.74 | 1.74 | 1.74 |
| **VEEA** | 7.20 | 7.20 | 7.20 | 7.20 | 7.20 | 7.20 |
| **IDA** | 9.30 | 9.30 | 9.30 | 9.30 | 9.30 | 9.30 |
| **PEA** | 24.87 | 24.34 | 24.17 | 24.5 | 24.56 | 24.26 |
| **IBOA** | 17 | 16.44 | 16.30 | 16.61 | 16.67 | 16.36 |
| **VCL** | 17.00 | 17.00 | 17.00 | 17.00 | 17.00 | 17.00 |
| **CN963** | 2.00 | 2.00 | 2.00 | 2.00 | 2.00 | 2.00 |
| **STAB-1** | 0.30 | 0.30 | 0.30 | 0.30 | 0.30 | 0.30 |
| **STAB-2** | 0.83 | 0.83 | 0.83 | 0.83 | 0.83 | 0.83 |
| **SURF-1** | 0.80 | 0.80 | 0.80 | 0.80 | 0.80 | 0.80 |
| **TPO** | 7.00 | - | - | - | - | - |
| **COMPINI-1** | - | 8.09 | - | - | - | - |
| **COMPINI-2** | - | - | 8.40 | - | - | - |
| **DIPOL-1** | - | - | - | 7.76 | - | - |
| **DIPOL-2** | - | - | - | - | 7.64 | - |
| **DIPOL-3** | - | - | - | - | - | 8.25 |

### Results and Evaluation

Except for the comparative ink COMP-3, which exhibited solubility issues due to the acyl phosphine oxide photoinitiator, all the inks were successfully inkjet printed onto the substrates SUB1 to SUB5 in 4 passes using an Anapurna^{™} H2050i LED at 35°C jetting temperature, at a 720x720 resolution and at 50% UV dose.

A comparison was also made with standard commercial inks. The cyan Agfa UV curable inks Anuvia^{™} 1551 and Anuvia^{™} 1250 were selected as comparative commercial inks.

The gloss value was measured for each printed sample and then averaged for each ink. The results are summarized in Table 6.

**Table 6**

| **Ink sample** | **Averaged gloss** |
|---|---|
| **COMP-1** | 17.3 |
| **COMP-2** | 14.0 |
| **Anuvia^{™} 1550** | 12.8 |
| **Anuvia^{™} 1250** | 13.7 |
| **INV-1** | 29.9 |
| **INV-2** | 36.5 |
| **INV-3** | 27.6 |

From Table 6, it becomes clear that all inventive inkjet inks provide a significantly higher gloss than the comparative inks or standard commercial inks. An improved smell was also noticed for the inventive inks INV-1 to INV-3 compared to the comparative ink COMP-1.

## Claims

1. A UV curable composition containing a mixture of free radical polymerizable monomers and a APO photoinitiator according to formula (I): 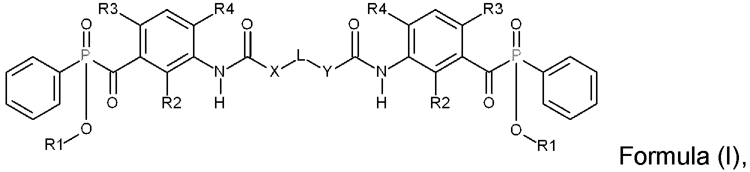 wherein
R1 is selected from the group consisting of an alkyl group, an alkenyl group, an alkynyl group, an aralkyl group, an alkaryl group and an aryl group or a heteroaryl group;
R2 and R3 are independently selected from an alkyl group and an alkoxy group;
R4 is selected from a hydrogen, an alkyl group and an alkoxy group;
X and Y are independently selected from an oxygen atom, a methylene group, a -C(=CH2)- group, and a carbon atom present in a group selected from a straight chain alkylene group, an alkenylene group, an arylene group, a heteroarylene group and a cycloalkylene group;
L represents a divalent linking group selected from the group consisting of an unsubstituted alkylene group, an arylene group, a heteroarylene group, a cycloalkylene group, a substituted alkylene group substituted by one or more ether groups, a substituted alkylene group substituted by one or more substituents selected from the group consisting of an aryl group, a heteroaryl group, an arylene group, a heteroarylene group, a cycloalkylene group, an ester group, an amide group, an amine group, an ether group, a thioether group, a ketone group, an aldehyde group, a sulfoxide group, a sulfone group, a sulfonate ester group, a sulphonamide group, -Cl, -Br, -I, -OH, -SH, -CN and -NO₂; and
wherein the UV curable composition is free of a photoinitiator including 2 monoacyl phosphine oxide moieties linked to each other via their acyl group and wherein the 2 monoacyl phosphine oxide moieties have a chemical structure differing in the phosphine oxide part.

2. The UV curable composition according to claim 1, wherein the APO photoinitiator is a photoinitiator according to formula (II):

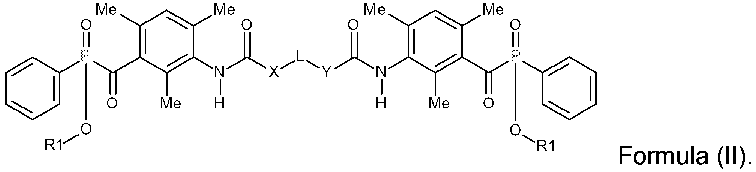

3. The UV curable composition according to claim 1 or 2, wherein R1 is a C₁-C₄-alkyl group.

4. The UV curable composition according to claim 1, wherein the APO photoinitiator is selected from the group consisting of: 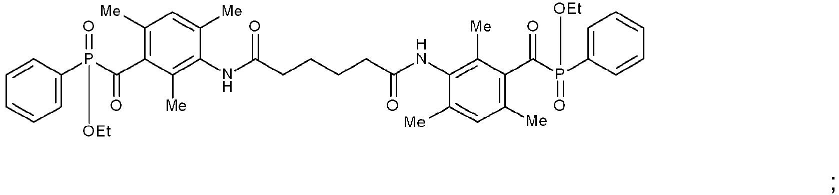 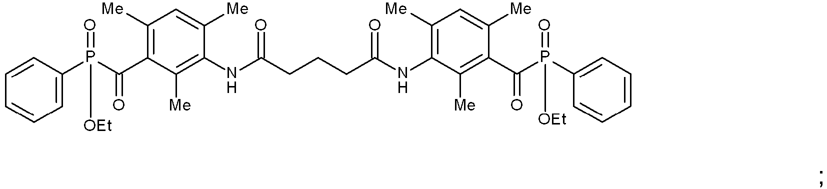 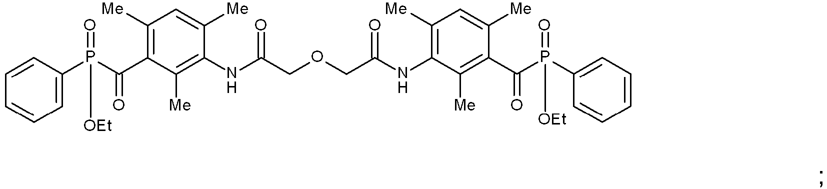 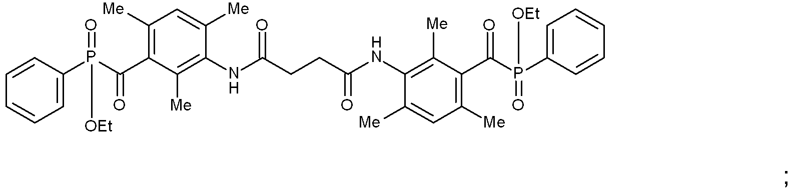 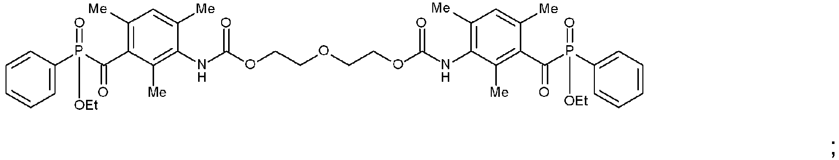 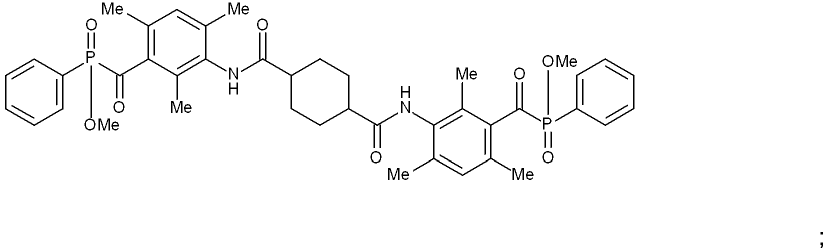 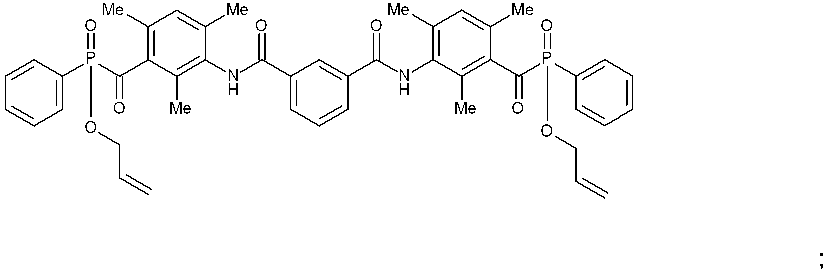 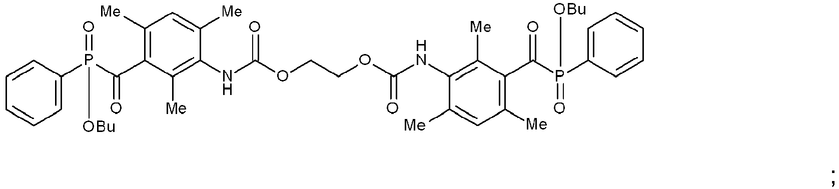 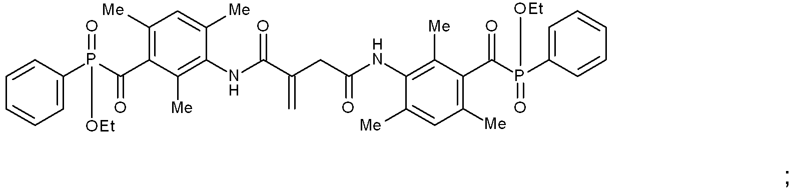 and

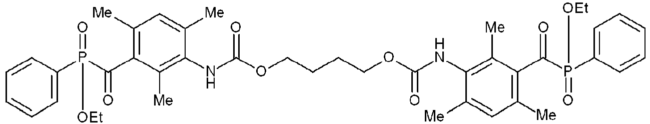

5. The UV curable composition according to any one of claims 1 to 4, wherein the mixture of free radical polymerizable monomers contains at least one of N-vinyl caprolactam, vinyl methyl oxazolidinone and (2'-vinyloxyethoxy)ethyl acrylate.

6. The UV curable composition according to any one of claims 1 to 5 containing a colorant.

7. A UV curable inkjet ink including a UV curable composition according to any one of claims 1 to 6.

8. The UV curable inkjet ink according to claim 7 having a mixture of free radical polymerizable monomers comprising of: a) 7 - 70 wt% of 2- (2'-vinyloxyethoxy)ethyl acrylate b) 1 - 65 wt% of one or more polymerizable compounds selected from the group consisting of monofunctional acrylates and difunctional acrylates; and c) 0 - 55 wt% of one or more polymerizable compounds selected from the group consisting of trifunctional acrylates, tetrafunctional acrylates, pentafunctional acrylates and hexafunctional acrylates.

9. A UV curable inkjet ink set including one or more UV curable inkjet inks according to claim 7 or 8.

10. The UV curable inkjet ink set according to claim 9 which includes:
- a cyan UV curable inkjet ink containing a beta-copper phthalocyanine pigment;
- a red or magenta UV curable inkjet ink containing a pigment selected from the group consisting of C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272, C.I. Pigment Violet 19, and mixed crystals thereof;
- a yellow UV curable inkjet ink containing a pigment selected from C.I. Pigment Yellow 74 C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 and mixed crystals thereof; and
- a black UV curable inkjet ink containing a carbon black pigment; optionally complemented by a white UV curable inkjet ink and/or a colourless UV curable inkjet ink.

11. A printed article comprising a cured composition derived from the UV curable composition of any one of claims 1 to 10.

12. The printed article of claim 11 selected from printed packaging, printed leather articles, and printed interior decoration articles.

13. The printed article of claim 11 or 12 obtained using inkjet printing technology.

14. An inkjet printing method comprising the steps of:
a) jetting an image with a UV curable inkjet ink according to any one of claims 1 to 13 on a substrate; and
b) curing the jetted image by UV light emitting diodes having an emission wavelength of 360 nm or larger.
